# EUROPÄISCHE PATENTSCHRIFT

(11) **EP 1 503 055 B1**
(45) Veröffentlichungstag und Bekanntmachung des Hinweises auf die Patenterteilung: **28.09.2011**
(21) Anmeldenummer: 04016280.2
(22) Anmeldetag: 10.07.2004
(51) Int. Cl.: F01N 3/20, F01N 3/28, F01N 1/10, F01N 13/02, B60K 15/00, B01D 53/94

(54) **Kraftfahrzeug mit spezieller Anordnung eines Kraftstofftanks, Vorschalldämpfers und Reduktionsmitteltanks**
Vehicle with a special arrangement of a fuel tank, a secondary muffler and a reduction agent tank
Véhicule avec un agencement particulier d'un réservoir de carburant, d'un silencieux secondaire et d'un réservoir pour agent réducteur

(30) Priorität: 01.08.2003 DE 10335265
(43) Veröffentlichungstag der Anmeldung: 02.02.2005
(60) Teilanmeldung: 05008020.9
(73) Patentinhaber: MAN Truck & Bus AG, 80995 München (DE)
(72) Erfinder: Stiermann, Erwin, Dipl.-Ing., 86356 Neusäss (DE)

(56) Entgegenhaltungen:
- EP-A- 0 976 677
- DE-A- 3 501 094
- DE-A- 10 123 359
- DE-A- 19 729 003
- PATENT ABSTRACTS OF JAPAN Bd. 1999, Nr. 09, 30. Juli 1999 (1999-07-30) & JP 11 093651 A (NIPPON ELECTRIC IND CO LTD), 6. April 1999 (1999-04-06)

## Beschreibung

Die Erfindung betrifft ein Kraftfahrzeug, insbesondere Lastkraftwagen, mit Merkmalen der im Oberbegriff des Anspruchs 1 angegebenen Art.

Aus der DE 101 23 359 A1 ist ein einer Brennkraftmaschine nachgeordneter Abgasstrang bekannt, in dem in Reihe hintereinander ein Vorschalldämpfer und anschließend ein Hauptschalldämpfer vorgesehen sind, in deren Innenräume jeweils mehrere Katalysatoren eingebaut sind. Der Erfindung liegt dabei die Problematik zugrunde, dass der Vorschalldämpfer im Vergleich zu jenem des Hauptschalldämpfers zwar ein kleineres Volumen aufweist, aber immer noch eine solche Größe hat, dass er nur unter schwierigen Umständen am Nutzfahrzeug unterbringbar ist. Zwecks Ausnützung der verfügbar hohen Abgastemperaturen sollte der Vorschalldämpfer mit seinem Hydrolysekatalysator räumlich möglichst motornah angeordnet werden. Sieht man dieses vor, gab es bisher Einbauprobleme für den nachfolgenden Hauptschalldämpfer, weil dort, wo dieser vorgesehen war, meist schon andere Bauteile oder Aggregate vorhanden waren, die dann versetzt angeordnet werden mussten. Letzteres ist oft nur schwierig oder gar nicht möglich. Ein weiteres Unterbringungsproblem ist mit dem Harnstoff-Wasser-Lösung-Tank (HWL-Tank) verbunden. Dieser sollte nach Möglichkeit ebenso wie die Dosiereinrichtung nicht zu weit von der Eindüsstelle entfernt sein, um zu lange Dosierleitungswege mit zum Einfrieren neigenden HWL-Zonen zu vermeiden. Doch auch für den HWL-Tank ist an sich in heutigen Kraftfahrzeugen kein Platz vorhanden, denn ein solcher Tank ist erst dann notwendig, wenn die Abgasvorschriften der EURO V-Norm wirksam werden und deren Einhaltung nicht ohne HWL-Eindüsung in das Abgas erreichbar wäre.

Dokument DE 44 17 237 A offenbart einen Kraftfahrzeug mit einem Kraftstofftank, wobei ein Schalldämpfer, ein Hydrolysekatalysator, ein Oxidationskatalysator eine Baueinheit bilden, die in ihrer Gesamtheit am Fahrgestell-Rahmen des Kraftfahrzeugs befestigbar ist. Ferner offenbart dieses Dokument einen HWL-Tank, der getrennt von der obengenannte Baueinheit angeordnet ist.

DE 197 29 003 zeigt eine Baueinheit eines HWL-Tanks und eines Kraftstofftanks, die in ihrer Gesamtheit am Fahrgestell-Rahmen des Kraftfahrzeugs befestigbar ist.

Es ist daher Aufgabe der Erfindung, für den HWL-Tank und den Vorschalldämpfer geeignete Unterbringungsmöglichkeiten im Kraftfahrzeug zu schaffen.

Diese Aufgabe ist bei einem Kraftfahrzeug mit den gattungsgemäßen Merkmalen erfindungsgemäß durch die im Kennzeichen des Anspruchs 1 angegebene Bauart gelöst.

Vorteilhafte Ausgestaltungen und Details der erfindungsgemäßen Lösung sind in den Unteransprüchen angegeben.

Erfindungsgemäß bilden der HWL-Tank und der Vorschalldämpfer mit dem Kraftstofftank eine kompakte Baueinheit, die komplett vorgefertigt/vormontiert in ihrer Gesamtheit am Fahrgestell-Rahmen des Kraftfahrzeugs befestigbar ist. In besonders vorteilhafter Weise wird diese Baueinheit anstelle eines Kraftstofftanks (z. B. eines großen mit 900 Liter Fassungsvermögen) am Fahrgestell-Rahmen angebaut, dessen Volumen oder Länge etwa jener/jenem der erfindungsgemäßen Baueinheit entspricht, wobei der innerhalb dieser Baueinheit gegebene Kraftstofftank ein gegenüber dem ersetzten Kraftstofftank z. B. um 30 bis 40 % kleineres, aber doch noch ausreichendes Tankvolumen aufweist. Der dadurch gewonnene Bauraum teilt sich innerhalb der Baueinheit beispielsweise zu etwa 1/3 auf den HWL-Tank und zu etwa 2/3 auf den Vorschalldämpfer auf. Auf diese Weise ist zwar ein öfteres Kraftstoffnachtanken erforderlich, aber der HWL-Tank und der Vorschalldämpfer sind in platzsparendster und handhabungsgünstigster Weise im Kraftfahrzeug untergebracht, denn auch das Nachtanken des HWL-Tanks ist bei dieser Anordnung desselben in einfachster Weise möglich. Andererseits kann das in der erfindungsgemäßen Baueinheit fehlende Kraftstofftankvolumen durch einen Zusatztank realisiert werden, der z. B. auf der gegenüberliegenden Rahmenseite oder zwischen den Rahmen-Längsträgern unterbringbar ist.

Nachstehend ist die erfindungsgemäße Lösung anhand der Zeichnung noch näher erläutert. In der Zeichnung zeigen:
- Fig. 1: schematisiert einen Längsschnitt durch ein erstes Ausführungsbeispiel der Erfindung,
- Fig. 2: das erste Ausführungsbeispiel der Erfindung in Draufsicht angebaut am Fahrgestell-Rahmen eines Lastkraftwagens, und
- Fig. 3: schematisiert einen Längsschnitt durch ein zweites Ausführungsbeispiel der Erfindung.

In der Zeichnung sind gleiche bzw. einander entsprechende Teile mit gleichen Bezugszeichen angegeben.

Die Erfindung bezieht sich auf ein Kraftfahrzeug, insbesondere Lastkraftwagen, mit einer Brennkraftmaschine, insbesondere Dieselmotor, die aus einem Kraftstofftank 1 mit Kraftstoff versorgbar ist und in deren Abgasstrang 2 ein Vorschalldämpfer 3 und ein Hauptschalldämpfer (nicht dargestellt) angeordnet sind. Der Vorschalldämpfer 3 ist dabei auf der einen Seite und der Hauptschalldämpfer auf der anderen Seite des Fahrgestell-Rahmens angeordnet und stehen über einen Abschnitt 2/2 der Abgasleitung 2 miteinander in Verbindung. In den Vorschalldämpfer 3 sind ein Hydrolysekatalysator 4 und eventuell wenigstens noch ein Oxidationskatalysator 5 eingebaut. Letztere(r) dient/dienen dazu, den NO₂-Anteil im Abgas signifikant zu erhöhen. Der Hydrolysekatalysator 4 ist mittels einer Dosiereinrichtung 6 über eine Dosierleitung 7 mit Sprühkopf 8 am freien Ende mit einer Harnstoff-Wasser-Lösung (HWL) beaufschlagbar, die in einem eigenen HWL-Tank 9 bevorratbar ist. Den Vorschalldämpfer 3 verlässt demnach ein mit Ammoniak und hohem NO₂-Anteil dosiertes Abgas, das mittels der SCR-Katalysatoren im Hauptschalldämpfer in optimaler Weise reinigbar ist.

Erfindungsgemäß bilden der HWL-Tank 9 und der Vorschalldämpfer 3 mit dem Kraftstofftank 1 eine Baueinheit 10, die in ihrer Gesamtheit am Fahrgestell-Rahmen des Fahrzeugs, dort einem der beiden Rahmen-Längsträger 11 befestigbar ist. Der Vorschalldämpfer 3, der HWL-Tank 9 und der Kraftstofftank 1 sind in Reihe hintereinander angeordnet, wobei innerhalb der Baueinheit der Vorschalldämpfer 3 am weitesten vorne angeordnet und der HWL-Tank 9 zwischen Vorschalldämpfer 3 und Kraftstofftank eingebaut ist. Vorzugsweise wird die aus Kraftstofftank 1, HWL-Tank 9 und Vorschalldämpfer 3 bestehende Baueinheit 10 komplett vormontiert anstelle eines Kraftstofftanks am Fahrgestellrahmen 11 angebaut, dessen Baulänge oder Volumen etwa jener bzw. jenem der Baueinheit 10 entspricht, wobei der innerhalb der Baueinheit 10 gegebene Kraftstofftank 1 gegenüber dem ersetzten Kraftstofftank bei gleichem Querschnitt ein z. B. um 30 bis 40 % kleineres Tankvolumen aufweist und sich dieser solchermaßen gewonnene Bauraum innerhalb der Baueinheit 10 teils, beispielsweise zu etwa 1/3 auf den HWL-Tank 9 und teils, beispielsweise zu etwa 2/3 auf den Vorschalldämpfer 3 aufteilt. Es können sich fallweise aber auch andere als vorgenannte Aufteilungen als praktikabel bzw. notwendig erweisen.

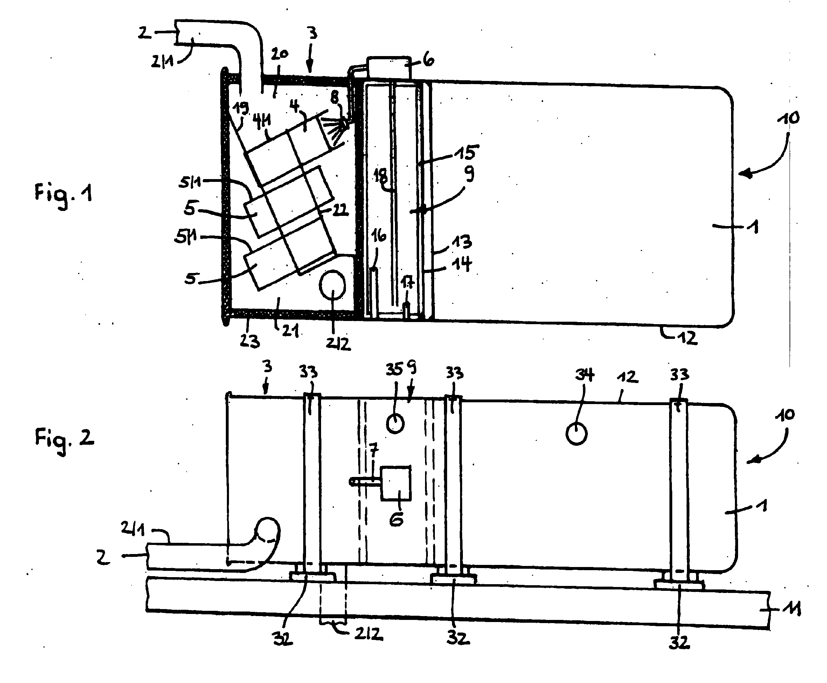

In Beispiel gemäß Fig. 1 ist der Kraftstofftank 1 innerhalb eines Gehäuses 12 durch eine Doppelwand 13, 14 vom HWL-Tank 9 getrennt, so dass bei etwaigen HWL-Leckagen diese nicht in den Kraftstofftank 1 gelangen können. Der HWL-Tank 9 weist innen generell eine thermisch isolierende Auskleidung 15 sowie eine in ihn eingebaute Heizeinrichtung 16, die ein Einfrieren der HWL verhindert, und einen in ihn eingebauten Füllstandsensor 17 auf. Die HWL-Dosiereinrichtung 6 ist an der Baueinheit 10 im Bereich des HWL-Tanks 9, vorzugsweise oben angebaut, angeordnet. Von dieser HWL-Dosiereinrichtung 6 ragt ein vertikales HWL-Saugrohr 18 in den HWL-Tank 9 hinein und reicht dort bis nahe zu dessen Boden hinunter. Außerdem geht von dieser Dosiereinrichtung 6 seitlich die HWL-Dosierleitung 7 ab, die in den Innenraum des Vorschalldämpfers 3 hineingeführt ist und dort im Eingangsbereich des Hydrolysekatalysators 4 bzw. dessen Gehäuses 4/1 mit ihrem Sprühkopf 8 endet.

Der Innenraum des Vorschalldämpfers 3 ist durch eine Zwischenwand 19 in eine Einströmkammer 20 und eine Ausströmkammer 21 unterteilt, wobei die Einströmkammer 20 mit einem von der Brennkraftmaschine bzw. deren Aufladeaggregat kommenden Abschnitt 2/1 der Abgasleitung 2 und die Ausströmkammer 21 mit einem die Verbindung zum Hauptschalldämpfer herstellenden Abschnitt 2/2 der Abgasleitung 2 kommuniziert. Die Katalysatoren 4, 5 sind im Vorschalldämpfer 3 achsparallel zueinander und nebeneinander angeordnet und dort mit ihren Gehäusen 4/1 bzw. 5/1 in der Zwischenwand 19 sowie einer beabstandet an dieser angeordneten Haltewand 22 befestigt. Die gezeigte Schrägstellung der Katalysatoren 4, 5 ist eine mögliche Einbauart. Wenn es der Bauraum des Vorschalldämpfers 3 und die Größe der Katalysatoren 4, 5 zulassen, sind letztere auch anders, z. B. vertikal stehend parallel zueinander und nebeneinander in den Vorschalldämpfer 3 einbaubar.

Der Vorschalldämpfer 3 ist innen mit einer Schicht 23 aus schalldämmenden Material ausgekleidet und zum HWL-Tank 9 hin noch zusätzlich thermisch isoliert, um eine zu starke Wärmeübertragung von dem den Vorschalldämpfer 3 durchströmenden Abgas zum HWL-Tank 9 hin zu vermeiden.

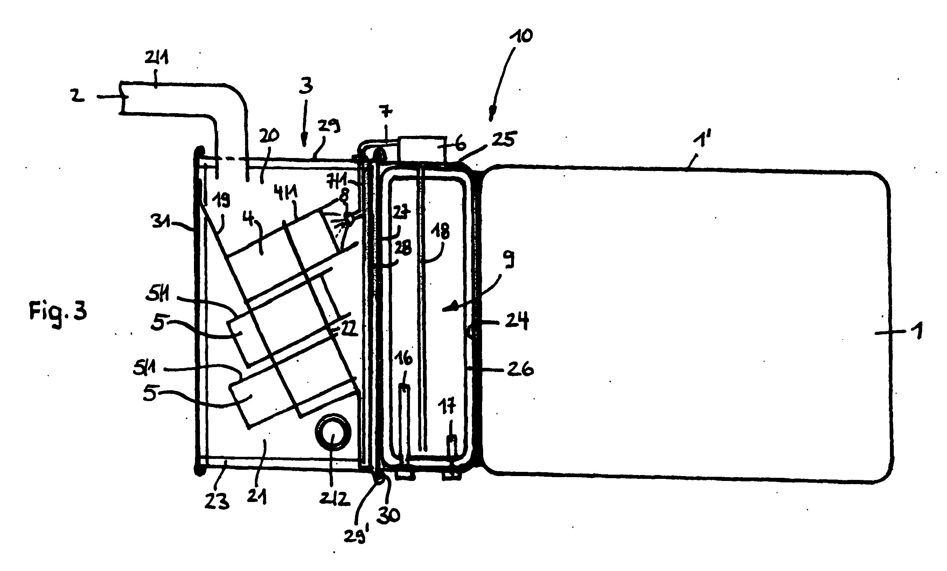

Beim Ausführungsbeispiel gemäß Fig. 3 ist der Kraftstofftank 1 innerhalb der Baueinheit 10 durch einen vorgefertigten Behälter aus Stahl oder Aluminium oder aluminiertem Stahlblech mit allseitig geschlossener Behälterwand 1' gebildet. An der vorderen Stirnwand 24 dieses Kraftstofftanks 1 wird ein topfförmiges, nach vorne zum Vorschalldämpfer 3 hin zunächst offenes HWL-Tank-Gehäuse 25 angeschlossen, vorzugsweise angeschweißt. In dieses wird dann ein in sich geschlossener, aus einem dickwandigen Isolationsmaterial vorgefertigter HWL-Tank-Innenkörper 26 von vorne her eingebaut. Das HWL-Tank-Gehäuse 25 ist anschließend durch eine HWL-Tank-Frontwand 27 verschließbar. Diese bildet gleichzeitig eine Zwischenwand zwischen HWL-Tank 9 und Vorschalldämpfer 3 und ist auf ihrer dem Innenraum des Vorschalldämpfers 3 zugewandten Seite mit einer Schicht 28 aus thermisch isolierendem Material beschichtet. An diese HWL-Tank-Frontwand 27 schließt sich eine zylindrische Umfangsaußenwand 29 des Vorschalldämpfers 3 an. Die mechanische Verbindung erfolgt z. B. durch Umbördelung der Umfangsaußenwand 29 im Bereich der HWL-Tank-Frontwand 27 einschließlich des ebenen vorderen Randes 30 am HWL-Tank-Gehäuse 25, an den sich die HWL-Tank-Frontwand 27 abstützt. Stirnseitig an der Umfangsaußenwand 29 schließt sich die vordere Stirnwand 31 des Vorschalldämpfers 3 an und ist mit letzterer z. B. durch randseitige Umbördelung verbindbar.

Innerhalb des Ausführungsbeispiels gemäß Fig. 3 bilden die Zwischenwand 19, die Haltewand 22 und die in ihren Gehäusen 4/1, 5/1 aufgenommenen Katalysatoren 4, 5 eine vorzufertigende Baugruppe, an deren Zwischenwand 19 anschließend die vordere Stirnwand 31 durch Anschweißen befestigbar ist. Danach werden an der vorderen Stirnwand 31 die Schicht 23 aus Isoliermaterial und dann die Umfangsaußenwand 29 angebracht, letztere z. B. durch randseitige Umbördelung. Anschließend wird die Zwischenwand 19 mit der Umfangsaußenwand 29 durch Schweißen verbunden. Die Umfangsaußenwand 29 ist vorher ebenfalls mit der Isoliermaterialschicht 23 belegt worden, zumindest in den Bereichen, die nach dem Anschweißen der Zwischenwand 19 nicht mehr zugänglich sind. Im nächsten Arbeitsgang wird ein Dosierleitungsstück 7/1 in eine Öffnung in der Umfangsaußenwand 29 eingesetzt und dort befestigt. Zuletzt wird diese solchermaßen vorgefertigte Vorschalldämpfer-Baugruppe zusammen mit der schon mit Thermoisolierschicht 28 und Schalldämmungsmaterial 23 beschichteten HWL-Tank-Frontwand 27 am vorderen Rand 30 des HWL-Tank-Gehäuses 25 angesetzt und zuletzt durch randseitige Umbördelung der Umfangsaußenwand 29 am HWL-Tank-Gehäuse 25 befestigt. Dann kann die Dosiereinrichtung 6 und das Leitungsverbindungsstück der Dosierleitung zum Teilstück 7/1 montiert werden.

Es versteht sich von selbst, dass im Rahmen des allgemeinen Erfindungsgedankens jederzeit auch andere als vorbeschriebene und in der Zeichnung dargestellte Ausführungs- und Realisierungsformen der erfindungsgemäßen Baueinheit 10 möglich sind.

Diese vorgefertigte und vormontierte Baueinheit 10 wird bei ihrer Endmontage am Rahmen, dort einem Rahmen-Längsträger 11 des Fahrzeugs z. B. an rahmenfesten Konsolen 32 angesetzt und dort durch Bänder, Bügel oder dergleichen Organe 33 befestigt.

Im Betrieb ist der Kraftstofftank 1 über einen durch einen Tankdeckel 34 verschließbaren Einfüllstutzen mit Kraftstoff und der HWL-Tank 9 über einen relativ weit davon entfernten, durch einen Tankdeckel 35 verschließbaren Einfüllstutzen mit HWL befüllbar.

## Patentansprüche

1. Kraftfahrzeug, insbesondere Lastkraftwagen, mit einer Brennkraftmaschine, die aus einem Kraftstofftank (1) mit Kraftstoff versorgbar ist und in deren Abgasstrang (2) ein Vorschalldämpfer (3) und ein Hauptschalldämpfer angeordnet sind, wobei in den Vorschalldämpfer (3) ein Hydrolysekatalysator (4) und eventuell noch wenigstens ein Oxidationskatalysator (5) eingebaut ist/sind, wobei der Hydrolysekatalysator (4) mittels einer Dosiereinrichtung (6, 7) mit einer Harnstoff-Wasser-Lösung (HWL) beaufschlagbar ist, die in einem eigenen HWL-Tank (9) bevorratbar ist, **dadurch gekennzeichnet, dass** der HWL-Tank (9) und der Vorschalldämpfer (3) mit dem Kraftstofftank (1) eine Baueinheit (10) bilden, die in ihrer Gesamtheit am Fahrgestell-Rahmen des Kraftfahrzeugs befestigbar ist.

2. Kraftfahrzeug nach Anspruch 1, **dadurch gekennzeichnet, dass** die aus Kraftstofftank (1), HWL-Tank (9) und Vorschalldämpfer (3) bestehende Baueinheit (10) komplett vormontiert anstelle eines Kraftstofftanks am Fahrgestell-Rahmen (11) anbaubar ist, dessen Baulänge oder Volumen etwa jener bzw. jenem der Baueinheit (10) entspricht, wobei der innerhalb der Baueinheit (10) gegebene Kraftstofftank (1) gegenüber dem ersetzten Kraftstofftank bei gleichem Querschnitt ein z. B. um 30 bis 40 % kleineres Tankvolumen aufweist und sich dieser solchermaßen gewonnene Bauraum innerhalb der Baueinheit (10) teils, beispielsweise zu 1/3, auf den HWL-Tank (9) und teils, beispielsweise zu 2/3 auf den Vorschalldämpfer (3) aufteilt.

3. Kraftfahrzeug nach einem der Ansprüche 1 und 2, **dadurch gekennzeichnet, dass** der Vorschalldämpfer (3), der HWL-Tank (9) und der Kraftstofftank (1) in Reihe hintereinander angeordnet und innerhalb der Baueinheit (10) der Vorschalldämpfer (3) am weitesten vorne angeordnet und der HWL-Tank (9) zwischen Vorschalldämpfer (3) und Kraftstofftank (1) eingebaut ist.

4. Kraftfahrzeug nach einem der vorhergehenden Ansprüche, **dadurch gekennzeichnet, dass** der Kraftstofftank (1) in einem Gehäuse (12) durch eine Doppelwand (13, 14) vom HWL-Tank (9) getrennt ist, so dass bei etwaigen HWL-Leckagen diese nicht in den Kraftstofftank (1) gelangen können.

5. Kraftfahrzeug nach einem der vorhergehenden Ansprüche, **dadurch gekennzeichnet, dass** der HWL-Tank (9) eine ihn thermisch isolierende Auskleidung (15) sowie eine in ihn eingebaute Heizeinrichtung (16) und einem in ihn eingebauten Füllstandssensor (17) aufweist.

6. Kraftfahrzeug nach einem der vorhergehenden Ansprüche, **dadurch gekennzeichnet, dass** die HWL-Dosiereinrichtung (6) an der Baueinheit (10) im Bereich des HWL-Tanks (9) angeordnet ist, dass von dieser HWL-Dosiereinrichtung (6) ein vertikales HWL-Saugrohr (18) in den HWL-Tank (9) hineinragt und bis nahe zu dessen Boden hinunter reicht und dass eine HWL-Dosierleitung (7) von der Dosiereinrichtung (6) abgeht, die in den Innenraum des Vorschalldämpfers (3) hineingeführt ist und dort im Eingangsbereich des Hydrolysekatalysators (4) bzw. dessen Gehäuses (4/1) mit einem Sprühkopf (8) endet.

7. Kraftfahrzeug nach einem der vorhergehenden Ansprüche, **dadurch gekennzeichnet, dass** der Innenraum des Vorschalldämpfers (3) durch eine Zwischenwand (19) in eine Einströmkammer (20) und eine Ausströmkammer (21) unterteilt ist, wobei die Einströmkammer (20) mit einem von der Brennkraftmaschine bzw. deren Aufladeaggregat kommenden Abschnitt (2/1) der Abgasleitung (2) und die Ausströmkammer (21) mit einem die Verbindung zum Hauptschalldämpfer herstellenden Abschnitt (2/2) der Abgasleitung (2) kommuniziert, und wobei die Katalysatoren (4, 5) im Vorschalldämpfer (3) achsparallel zueinander und nebeneinander angeordnet und dort mit ihren Gehäusen (4/1, 5/1) in der Zwischenwand (19) sowie einer beabstandet zu dieser angeordneten Haltewand (22) befestigt sind.

8. Kraftfahrzeug nach einem der vorhergehenden Ansprüche, **dadurch gekennzeichnet, dass** der Vorschalldämpfer (3) innen mit einer Schicht aus schalldämmendem Material ausgekleidet ist und zum HWL-Tank (9) hin noch zusätzlich thermisch isoliert ist, um eine zu starke Wärmeübertragung zum HWL-Tank (9) hin zu vermeiden.

9. Kraftfahrzeug nach einem der vorhergehenden Ansprüche, **dadurch gekennzeichnet, dass** der Kraftstofftank (1) innerhalb der Baueinheit durch einen vorgefertigten Behälter mit allseitig geschlossener Behälterwand (23) gebildet ist, dass an der vorderen Stirnwand (24) dieses vorgefertigten Kraftstofftanks (1) ein topfförmiges, nach vorne zum Vorschalldämpfer (3) hin zunächst offenes HWL-Tank-Gehäuse (25) angeschlossen, insbesondere angeschweißt wird, in das ein in sich geschlossener, aus einem dickwandigen Isolationsmaterial vorgefertigter HWL-Tank-Innenkörper (26) von vorne her einbaubar ist und das dann durch eine Frontwand (27) verschließbar ist, dass diese HWL-Tank-Frontwand (27) gleichzeitig die Zwischenwand zwischen HWL-Tank (9) und Vorschalldämpfer (3) bildet und auf ihrer dem Innenraum des Vorschalldämpfers (3) zugewandten Seite mit einer Schicht (28) aus thermisch isolierendem Material beschichtet ist, dass sich an die HWL-Tank-Frontwand (27) eine zylindrische Umfangsaußenwand (29) des Vorschalldämpfers (3) anschließt, z. B. durch Umbördelung der HWL-Tank-Frontwand (27) einschließlich des ebenen vorderen Randes (30) am HWL-Tank-Gehäuse (25), an dem sich die HWL-Tank-Frontwand (27) abstützt, und dass sich stirnseitig vom an der Umfangsaußenwand (29) die vordere Stirnwand (31) des Vorschalldämpfers (3) anschließt und mit dieser z. B. durch randseitige Umbördelung verbindbar ist.

10. Kraftfahrzeug nach den Ansprüchen 7 bis 9, **dadurch gekennzeichnet, dass** die Zwischenwand (19), die Haltewand (22) und die in ihren Gehäusen (4/1, 5/1) aufgenommenen Katalysatoren (4, 5) eine vorzufertigende Baugruppe bilden, an deren Zwischenwand (19) anschließend die vordere Stirnwand (31) durch Anschweißen befestigbar ist, dann die Umfangsaußenwand (29) an der vorderen Stirnwand (31) anbringbar ist, z. B. durch randseitige Umbördelung, anschließend die Zwischenwand (19) mit der Umfangsaußenwand (29) durch Schweißen verbindbar ist, dann ein Dosierleitungsstück (7/1) in eine Öffnung in der Umfangsaußenwand (29) einsetzbar and an dieser befestigbar ist und zuletzt diese solchermaßen vorgefertigte Vorschalldämpfer-Baugruppe zusammen mit der HWL-Tank-Frontwand (27) am vorderen Rand des HWL-Tank-Gehäuses (25) ansetzbar und durch randseitige Umbördelung der Umfangsaußenwand (29) am HWL-Tank-Gehäuse (25) befestigbar ist.

## Claims

1. Vehicle, in particular a truck, with a combustion engine that can be supplied with fuel from a fuel tank (1) and in which engine the exhaust gas tract (2) is provided with a secondary muffler (3) and a main muffler, whereby a hydrolysis catalytic converter (4) and possibly at least one oxidising catalytic converter (5) is/are fitted in the secondary muffler (3), and whereby the hydrolysis catalytic converter (4) can be supplied with a urea/water solution (HWL) by a metering device (6, 7), which solution can be stored in its own HWL tank (9), **characterised in that** the HWL tank (9) and the secondary muffler (3) form a single unit (10) with the fuel tank (1), which unit can be mounted in its entirety on the chassis frame of the vehicle.

2. Vehicle in accordance with claim 1, **characterised in that** the unit (10) consisting of the fuel tank (1), the HWL tank (9) and the secondary muffler (3) can be attached fully assembled on the chassis frame (11) in place of a fuel tank, which fuel tank corresponds approximately in its design length or volume to the same values of the unit (10), whereby the fuel tank (1) arranged within the unit (10) provides a smaller tank volume, for example 30 to 40% smaller than the replaced fuel tank given the same cross-section, and whereby the design space within the unit (10) gained in such a fashion is allocated partly, for example 1/3, to the HWL tank (9) and partly, for example 2/3, to the secondary muffler (3).

3. Vehicle in accordance with one of claims 1 and 2, **characterised in that** the secondary muffler (3), the HWL tank (9) and the fuel tank (1) are arranged in series behind each other and that, inside the unit (10), the secondary muffler (3) is arranged the furthest forward and the HWL tank (9) is fitted between the secondary muffler (3) and the fuel tank (1).

4. Vehicle in accordance with one of the previous claims, **characterised in that** the fuel tank (1) is separated in a housing (12) from the HWL tank (9) by a double wall (13, 14), so that no possible leakage of HWL can penetrate into the fuel tank (1).

5. Vehicle in accordance with one of the previous claims, **characterised in that** the HWL tank (9) provides a lining (15) that thermally insulates the HWL tank, a heating device (16) that is fitted in the HWL tank and a fill level sensor (17) that is fitted in the HWL tank.

6. Vehicle in accordance with one of the previous claims, **characterised in that** the HWL metering device (6) is arranged at the unit (10) in the area of the HWL tank (9), that a vertical HWL intake pipe (18) protrudes from this HWL metering device (6) into the HWL tank (9) and extends to a point close to the floor of the HWL tank, and that an HWL metering line (7) exits from the metering device (6), which metering line is fed into the interior of the secondary muffler (3) and there ends with a spray head (8) in the entry area of the hydrolysis catalytic converter (4) and/or of the casing (4/1) of the hydrolysis catalytic converter.

7. Vehicle in accordance with one of the previous claims, **characterised in that** the interior of the secondary muffler (3) is divided by an intermediate partition (19) into an inflow chamber (20) and an outflow chamber (21), whereby the inflow chamber (20) communicates with a section (2/1) of the exhaust gas line (2) coming from the combustion engine and/or its charging unit and the outflow chamber (21) communicates with a section (2/2) of the exhaust line (2) that creates the connection to the main muffler, and whereby the catalytic converters (4, 5) in the secondary muffler (3) are arranged axially parallel to each other and next to each other and are fastened there with their casings (4/1, 5/1) in the intermediate partition (19) and in a retaining wall (22) arranged at a distance from the intermediate partition.

8. Vehicle in accordance with one of the previous claims, **characterised in that** the secondary muffler (3) is lined on the interior with a coating of sound-insulating material, and is also insulated thermally in the direction of the HWL tank (9), in order to prevent excessive heat transfer to the HWL tank (9).

9. Vehicle in accordance with one of the previous claims, **characterised in that** the fuel tank (1) is formed within the unit by a pre-assembled container with a container wall (23) sealed on all sides; that a pan-shaped, initially open HWL tank casing (25) facing to the front towards the secondary muffler (3) is attached and, in particular, welded, to the front face (24) of this pre-assembled fuel tank (1), into which HWL tank casing a self-contained HWL tank inner body (26) that is pre-assembled from a thick-walled insulation material can be fitted from the front and which inner body can then be locked through a front wall (27); that this HWL tank front wall (27) simultaneously forms the intermediate partition between the HWL tank (9) and the secondary muffler (3) and is coated on the side facing the interior of the secondary muffler (3) with a coating (28) of thermally insulating material; that a cylindrical, circumferential outer wall (29) of the secondary muffler (3) is connected to the HWL tank front wall (27), e.g. through beading of the HWL tank front wall (27) including the even, front edge (30) of the HWL tank casing (25), on which edge the HWL tank front wall (27) is supported; and that the front wall (31) of the secondary muffler (3) connects to the front face of the circumferential outer wall (29) and can be connected to this outer wall, for example, through beading on the edge side.

10. Vehicle in accordance with claims 7 to 9, **characterised in that** the intermediate partition (19), the retaining wall (22) and the catalytic converters (4, 5) housed in their casings (4/1, 5/1) form an assembly that must be pre-assembled, whereby the front wall (31) can be fastened by welding in connection to the intermediate partition (19) of this assembly, and subsequently the circumferential outer wall (29) can be attached to the front wall (31), e.g. through beading on the edge side; subsequently, the intermediate partition (19) can be connected to the circumferential outer wall (29) by welding; then a piece of metering line (7/1) can be inserted in an aperture in the circumferential outer wall (29) and can be attached to the circumferential outer wall and, finally, the secondary-muffler assembly, having been pre-assembled in this manner, can be attached together with the HWL tank front wall (27) on the front edge of the HWL tank casing (25) and can be fastened on the HWL tank casing (25) through beading of the circumferential outer wall (29) on the edge side.

## Revendications

1. Véhicule motorisé, en particulier camion, avec un moteur à combustion interne qui peut être approvisionné en carburant à partir d'un réservoir à carburant (1), et un présilencieux (3) et un silencieux principal sont disposés dans sa ligne d'échappement (2), auquel cas le présilencieux (3) contient un catalyseur à hydrolyse (4) et éventuellement encore au moins un catalyseur à oxydation (5), le catalyseur à hydrolyse (4) pouvant être alimenté en une solution d'urée et d'eau (HWL) au moyen d'un dispositif de dosage (6, 7) et cette solution pouvant être stockée dans un propre réservoir HWL (9), **caractérisé en ce que** le réservoir HWL (9) et le présilencieux (3) forment avec le réservoir à carburant (1) une unité de construction (10) qui peut être fixée sur le cadre de châssis du véhicule motorisé dans son intégralité.

2. Véhicule motorisé selon la revendication 1, **caractérisé en ce que** l'unité de construction (10) composée du réservoir à carburant (1), du réservoir HWL (9) et du présilencieux (3) peut être posée sur le cadre de châssis (11) de manière complètement prémontée à la place d'un réservoir à carburant, dont sa longueur de montage ou son volume correspond à peu près à celle ou celui de l'unité de construction (10), auquel cas le réservoir à carburant (1) intégré à l'intérieur de l'unité de construction (10) présente par rapport au réservoir à carburant remplacé à coupe transversale identique un volume de réservoir plus petit, par exemple, de 30 à 40 % et cet espace de montage gagné de cette façon à l'intérieur de l'unité de construction (10) est octroyé en partie au réservoir HWL (9), par exemple, à hauteur de 1/3 et en partie au présilencieux (3), par exemple, à hauteur de 2/3.

3. Véhicule motorisé selon l'une des revendications 1 et 2, **caractérisé en ce que** le présilencieux (3), le réservoir HWL (9) et le réservoir à carburant (1) sont disposés en ligne les uns derrière les autres et, à l'intérieur de l'unité de construction (10), le présilencieux (3) est disposé le plus loin à l'avant et le réservoir HWL (9) est monté entre le présilencieux (3) et le réservoir à carburant (1).

4. Véhicule motorisé selon l'une des revendications mentionnées précédemment, **caractérisé en ce que** le réservoir à carburant (1) est séparé du réservoir HWL (9) dans un carter (12) par une double paroi (13, 14) de telle manière qu'en cas de fuites éventuelles de HWL, celles-ci ne puissent pas pénétrer dans le réservoir à carburant (1).

5. Véhicule motorisé selon l'une des revendications mentionnées précédemment, **caractérisé en ce que** le réservoir HWL (9) présente un habillage l'isolant thermiquement (15) ainsi qu'un dispositif de chauffage (16) intégré à lui et un capteur de niveau de remplissage (17) intégré à lui.

6. Véhicule motorisé selon l'une des revendications mentionnées précédemment, **caractérisé en ce que** le dispositif de dosage HWL (6) est disposé sur l'unité de construction (10) au niveau du réservoir HWL (9), **en ce qu'**à partir de ce dispositif de dosage HWL (6), un tuyau d'admission HWL vertical (18) pénètre dans le réservoir HWL (9) et descend pratiquement jusqu'à son fond et **en ce qu'**une conduite de dosage HWL (7) part du dispositif de dosage (6), passe dans l'espace intérieur du présilencieux (3) et se termine à cet endroit dans la zone d'entrée du catalyseur à hydrolyse (4) ou de son carter (4/1) par une tête de pulvérisation (8).

7. Véhicule motorisé selon l'une des revendications mentionnées précédemment, **caractérisé en ce que** l'espace intérieur du présilencieux (3) est subdivisé par une paroi intermédiaire (19) en un compartiment d'admission (20) et un compartiment d'échappement (21), auquel cas le compartiment d'admission (20) communique avec une partie (2/1) de la conduite d'échappement (2) provenant du moteur à combustion interne ou de son organe de suralimentation et le compartiment d'échappement (21) communique avec une partie (2/2) de la conduite d'échappement (2) établissant une liaison avec le silencieux principal et auquel cas les catalyseurs (4, 5) sont disposés dans le présilencieux (3) parallèlement à l'axe les uns par rapport aux autres et les uns à côté des autres et sont fixés à cet endroit avec leur carter respectif (4/1, 5/1) dans la paroi intermédiaire (19) ainsi que dans une paroi de maintien (22) disposée de manière distante par rapport à celle-ci.

8. Véhicule motorisé selon l'une des revendications mentionnées précédemment, **caractérisé en ce que** le présilencieux (3) est habillé à l'intérieur d'une couche de matériau insonorisant et est encore isolé thermiquement en supplément par rapport au réservoir HWL (9) pour éviter une transmission trop forte de la chaleur au réservoir HWL (9).

9. Véhicule motorisé selon l'une des revendications mentionnées précédemment, **caractérisé en ce que** le réservoir à carburant (1) situé à l'intérieur de l'unité de construction est formé d'un réservoir préfabriqué avec une paroi de réservoir (23) fermée de tous les côtés, **en ce qu'**un carter de réservoir HWL (25) en forme de pot, ouvert tout d'abord vers l'avant par rapport au présilencieux (3), est raccordé, en particulier soudé sur la paroi avant (24) de ce réservoir à carburant préfabriqué (1), carter dans lequel il est possible de monter à partir de l'avant un corps intérieur de réservoir HWL (26) fermé sur lui et préfabriqué en matériau isolant à paroi épaisse et qui peut ensuite être obturé par une paroi avant (27), **en ce que** cette paroi avant de réservoir HWL (27) forme simultanément la paroi intermédiaire entre le réservoir HWL (9) et le présilencieux (3) et est recouverte sur son côté opposé à l'espace intérieur du présilencieux (3) d'une couche (28) en matériau thermo-isolant, **en ce qu'**une paroi extérieure de circonférence (29) cylindrique du présilencieux (3) est reliée à la paroi avant de réservoir HWL (27), par exemple, par rabattement du bord de la paroi avant de réservoir HWL (27), y compris du bord avant plan (30) sur le carter de réservoir HWL (25) sur lequel la paroi avant de réservoir HWL (27) s'appuie, et **en ce que** la paroi avant (31) du présilencieux (3) est reliée du côté avant à l'avant sur la paroi extérieure de circonférence (29) et peut être reliée à celle-ci, par exemple, par un rabattement du bord.

10. Véhicule motorisé selon les revendications 7 à 9, **caractérisé en ce que** la paroi intermédiaire (19), la paroi de maintien (22) et les catalyseurs (4, 5) intégrés dans leur carter (4/1, 5/1) forment un ensemble à préfabriquer sur la paroi intermédiaire duquel (19) il est ensuite possible de fixer la paroi avant (31) par soudage, puis la paroi extérieure de circonférence (29) peut être posée sur la paroi avant (31), par exemple par rabattement du bord, puis la paroi intermédiaire (19) peut être reliée à la paroi extérieure de circonférence (29) par soudage, puis un élément de conduite de dosage (7/1) peut être monté dans un orifice réalisé dans la paroi extérieure de circonférence (29) et fixé sur celle-ci et, pour finir, cet ensemble de présilencieux préfabriqué de cette manière peut être posé conjointement avec la paroi avant de réservoir HWL (27) sur le bord avant du carter de réservoir HWL (25) et être fixé sur le carter de réservoir HWL (25) par rabattement du bord de la paroi extérieure de circonférence (29).
